# EUROPÄISCHE PATENTSCHRIFT

(11) **EP 2 918 430 B1**
(45) Veröffentlichungstag und Bekanntmachung des Hinweises auf die Patenterteilung: **03.05.2017**
(21) Anmeldenummer: 14159165.1
(22) Anmeldetag: 12.03.2014
(51) Int. Cl.: B60G 7/00, B60G 3/06

(54) **Fahrwerkslenker für ein Kraftfahrzeug**
Suspension arm for a motor vehicle
Bras de suspension pour véhicule automobile

(43) Veröffentlichungstag der Anmeldung: 16.09.2015
(73) Patentinhaber: Autotech Engineering Deutschland GmbH, 33647 Bielefeld (DE)
(72) Erfinder: Haselhorst, Kai, 33775 Versmold (DE); Friesen, Viktor, 33647 Bielefeld (DE); Geßner, Denis, 33649 Bielefeld (DE)
(74) Vertreter: Cohausz & Florack

(56) Entgegenhaltungen:
- EP-A1- 2 295 269
- EP-A2- 0 794 075
- WO-A2-2010/004414
- DE-U1-202005 011 340

## Beschreibung

Die Erfindung betrifft einen Fahrwerkslenker mit einem einschaligen Grundkörper aus Blech, an dem mehrere Lagerbereiche zur Anbindung von Lagerelementen ausgebildet sind, mit denen der Grundkörper mit der Karosserie und einem beweglichen Teil einer Radaufhängung eines Kraftfahrzeuges verbindbar ist, wobei der Grundkörper zwei ineinander übergehende Arme aufweist, die eine Grundkörperebene und einen konkavförmigen Randbereich des Grundkörpers definieren, wobei sich der konkavförmige Randbereich von einem radseitigen Lagerbereich bis zu einem karosserieseitigen Lagerbereich erstreckt und relativ zu der Grundkörperebene abgewinkelt ist.

Fahrwerkslenker, die ein Bindeglied zwischen der Karosserie eines Kraftfahrzeuges und einem dynamisch beweglichen Teil einer Radaufhängung, insbesondere einem Radträger bilden, sind in verschiedenen Ausführungen bekannt. Sie können als gegossene Bauteile oder als Schalen aus Stahlblech ausgebildet sein. Bei einem solchen Fahrwerkslenker kommt es neben seiner Formsteifigkeit und Verschleißbeständigkeit auch auf sein Gewicht an. Denn durch ein geringes Bauteilgewicht bei hoher Formsteifigkeit lassen sich eine Reduzierung des Fahrzeuggewichts und damit eine Verringerung des Kraftstoffverbrauchs erreichen.

Ein bekannter Fahrwerkslenker der eingangs genannten Art (DE 10 2007 018 569 A1) hat im Wesentlichen eine L-förmige oder dreieckige Konfiguration. Der bekannte Fahrwerkslenker ist einschalig ausgebildet, wobei am Ende einer seiner Blecharme ein Lagerzapfen zur Anbindung eines buchsenförmigen Lagerelements angeordnet ist. Der Blecharm besitzt ein U-förmiges Querschnittprofils und läuft in eine Tülle aus, die den Lagerzapfen mit einem Umschlingungswinkel von mindestens 270° umschließt und mit dem Zapfen stoffschlüssig verbunden ist. Zwar lässt sich ein solcher Fahrwerkslenker (Querlenker) wegen der einschaligen Blechbauweise kostengünstig herstellen, doch ist seine Formsteifigkeit bei Verwendung von relativ dünnem Blech zur Erzielung eines geringen Bauteilgewichts mitunter unbefriedigend.

Die WO 2010/004414 A2, die als nächstliegender Stand der Technik betrachtet wird, beschreibt ein Verfahren zum Pressformen eines Fahrwerklenkers der eingangs genannten Art, der durch Tiefziehen und Biegen einer ebenen Stahlblechplatine erlangt wird. Der Fahrwerkslenker weist einen mittleren Abschnitt auf, der von einer Umfangskante umgeben ist. Ein erster Abschnitt dieses Lenkers ist zur Verbindung mit einer ersten Lagerbuchse ausgebildet, während ein zweiter Abschnitt des Lenkers eine Bohrung zur Aufnahme eines Gelenks und ein dritter Abschnitt des Lenkers eine Bohrung zur Aufnahme einer zweiten Lagerbuchse aufweisen.

Aus der EP 2 295 269 A1 ist ein Fahrwerklenker der eingangs genannten Art bekannt, der einen Achsschenkelgelenk-Montageabschnitt, einen ersten Fahrzeugkarosseriemontageabschnitt und einen zweiten Fahrzeugkarosseriemontageabschnitt aufweist. Der Fahrwerklenker umfasst dabei einen ersten oberen Wandabschnitt, der sich von dem ersten Fahrzeugkarosseriemontageabschnitt zu dem zweiten Fahrzeugkarosseriemontageabschnitt erstreckt, einen zweiten oberen Wandabschnitt, der sich von dem zweiten Fahrzeugkarosseriemontageabschnitt zu dem Achsschenkelgelenk-Montageabschnitt erstreckt, und einen dritten oberen Wandabschnitt, der sich von dem Achsschenkelgelenk-Montageabschnitt zu dem ersten Fahrzeugkarosseriemontageabschnitt erstreckt. Des Weiteren umfasst der Fahrwerkslenker einen ersten unteren Wandabschnitt, der sich in einer tieferen Position als die ersten und zweiten oberen Wandabschnitte befindet und die ersten und zweiten oberen Wandabschnitte verbindet, sowie einen zweiten unteren Wandabschnitt, der sich in einer tieferen Position als die zweiten und dritten oberen Wandabschnitte befindet und die zweiten und dritten oberen Wandabschnitte verbindet. Ferner umfasst der Fahrwerkslenker einen ersten geneigten Vorsprungabschnitt, der derart ausgebildet ist, dass er sich in einem Endteil auf der Seite des ersten Fahrzeugkarosseriemontageabschnitts des ersten unteren Wandabschnitts nach oben wölbt und eine Höhe hat, die von dem ersten oberen Wandabschnitt in Richtung des zweiten oberen Wandabschnitts gehend allmählich abnimmt, und einen zweiten geneigten Vorsprungabschnitt, der derart ausgebildet ist, dass er sich in einem Endteil auf der Seite des ersten Fahrzeugkarosseriemontageabschnitts des zweiten unteren Wandabschnitts wölbt und eine Höhe hat, die von dem dritten oberen Wandabschnitt in Richtung des zweiten oberen Wandabschnitts gehend allmählich abnimmt.

Der vorliegenden Erfindung lag die Aufgabe zugrunde, einen Fahrwerkslenker zu schaffen, der sich kostengünstig herstellen lässt und bei hoher Formsteifigkeit (Bauteilsteifigkeit) ein geringes Gewicht aufweist.

Diese Aufgabe wird erfindungsgemäß durch einen Fahrwerkslenker mit den Merkmalen des Anspruchs 1 gelöst. Bevorzugte und vorteilhafte Ausgestaltungen des erfindungsgemäßen Fahrwerkslenkers sind in den Unteransprüchen angegeben.

Der erfindungsgemäße Fahrwerkslenker ist dadurch gekennzeichnet, dass der abgewinkelte, konkavförmige Randbereich seines Grundkörpers zumindest entlang eines Bogenlängenabschnitts mindestens eine schräge Fläche aufweist, die einer Fase entspricht und im Querschnitt betrachtet mit einer an sie angrenzenden Fläche des abgewinkelten, konkavförmigen Randbereichs einen Winkel im Bereich von 25° bis 75° einschließt, wobei der Bogenlängenabschnitt mindestens 10%, vorzugsweise mindestens 20% der Bogenlänge des abgewinkelten, konkavförmigen Randbereichs beträgt, und wobei die schräge Fläche im Querschnitt betrachtet eine Länge im Bereich von 5 mm bis 20 mm aufweist.

Hierdurch wird bei vorgegebener oder beibehaltener Blechdicke bzw. konstantem Bauteilgewicht die Formsteifigkeit, insbesondere die zulässige Knicklast des Fahrwerkslenkers erhöht. Des Weiteren ergibt sich durch die erfindungsgemäße Lösung eine gleichmäßigere Spannungsverteilung in dem Lenker im Fahrbetrieb. Auch lässt sich der Fahrwerkslenker aufgrund der einschaligen Blechbauweise kostengünstig herstellen; dies gilt insbesondere auch für das Formen der schrägen Fläche.

Die an dem abgewinkelten, konkavförmigen Randbereich des Grundkörpers ausgebildete schräge Fläche entspricht einer Fase. Sie kann entlang der gesamten Bogenlänge des abgewinkelten, konkavförmigen Randbereichs des Grundkörpers ausgebildet sein. Zur Erhöhung der Bauteilsteifigkeit, insbesondere Knicklast, und/oder zur Vergleichmäßigung der Spannungsverteilung in dem Grundkörper kann es allerdings auch ausreichen, wenn sich die schräge Fläche (Fase) nur über eine Teillänge der Bogenlänge des abgewinkelten, konkavförmigen Randbereichs erstreckt, beispielsweise über weniger als 80%, insbesondere weniger als 60% dieser Bogenlänge erstreckt. Die Erfindung sieht ferner vor, dass der Bogenlängenabschnitt, über den sich die schräge Fläche erstreckt, mindestens 10%, vorzugsweise mindestens 20% der Bogenlänge des abgewinkelten, konkavförmigen Randbereichs beträgt. Dadurch, dass erfindungsgemäß zudem die schräge Fläche im Querschnitt betrachtet eine Länge im Bereich von 5 mm bis 20 mm aufweist, ist die Bauteilsteifigkeit bzw. aufnehmbare Knicklast des Fahrwerkslenkers deutlich erhöht.

Eine vorteilhafte Ausgestaltung des erfindungsgemäßen Fahrwerkslenkers ist dadurch gekennzeichnet, dass sich der Winkel, den die schräge Fläche mit der an sie angrenzenden Fläche des abgewinkelten, konkaven Randbereichs einschließt, entlang des Bogenlängenabschnitts ändert, wobei die Änderung mindestens 5°, vorzugsweise mindestens 10° beträgt. Hierdurch kann die Bauteilsteifigkeit, insbesondere die zulässige Knicklast weiter erhöht werden. Auch kann durch diese Ausgestaltung die im Grundkörper des Fahrwerkslenkers während des Fahrbetriebes auftretende Spannungsverteilung weiter vergleichmäßig bzw. optimiert werden.

Zudem wurde gefunden, dass die Bauteilsteifigkeit, die aufnehmbare Knicklast des Fahrwerkslenkers und/oder die Spannungsverteilung weiter optimiert werden, wenn gemäß einer bevorzugten Ausgestaltung der Erfindung sich die Länge der schrägen Fläche entlang des Bogenlängenabschnitts ändert, wobei die Änderung mindestens 1 mm, insbesondere mindestens 2 mm beträgt.

Besonders bevorzugt ist eine Ausführungsform des erfindungsgemäßen Fahrwerkslenkers, bei welcher der die schräge Fläche aufweisende Bogenlängenabschnitt den Grundkörperbereich kreuzt, in welchem die beiden Arme ineinander übergehen. Diese Ausgestaltung ist hinsichtlich der angestrebten Erhöhung der Bauteilsteifigkeit und der Vergleichmäßigung der Spannungsverteilung besonders effektiv.

Hinsichtlich einer Vergleichmäßigung der Spannungsverteilung ist es günstig, wenn nach einer weiteren bevorzugten Ausgestaltung des erfindungsgemäßen Fahrwerkslenkers dessen Grundkörperebene mit einer runden Kante in die schräge Fläche (Fase) übergeht. Vorzugsweise besitzt diese runde Kante einen Radius (Außenradius), der größer als die Blechdicke des Grundkörpers ist, beispielsweise das 1,5-fache bis 3-fache der Blechdicke beträgt.

Auch ist es zur Vergleichmäßigung der Spannungsverteilung günstig, wenn nach einer weiteren bevorzugten Ausgestaltung des erfindungsgemäßen Fahrwerkslenkers dessen schräge Fläche mit einer runden Kante in die an sie angrenzende Fläche des abgewinkelten, konkavförmigen Randbereichs übergeht. Vorzugsweise besitzt diese runde Kante einen Radius (Außenradius), der ebenfalls größer als die Blechdicke des Grundkörpers ist, beispielsweise das 1,5-fache bis 3-fache der Blechdicke beträgt.

Die Herstellungskosten eines erfindungsgemäßen Fahrwerkslenkers sind insbesondere dann vergleichsweise niedrig, wenn gemäß einer bevorzugten Ausführungsform der Grundkörper des Fahrwerkslenkers an dem jeweiligen Lagerbereich eine offene Querschnittsform aufweist.

Um ein möglichst geringes Gewicht bei hoher Bauteilsteifigkeit zu erzielen, sollte das Blech des Grundkörpers eine Dicke im Bereich von 2 mm bis 6 mm und eine Zugfestigkeit im Bereich von 350 MPa bis 1.200 MPa haben. Vorzugsweise sollte der Grundkörper aus Dualphasenstahl bestehen. Auch sogenannte Complexphasenstähle oder thermomechanisch gewalzte Kaltformstähle sind zur Herstellung des erfindungsgemäßen Fahrwerkslenkers gut geeignet, wenn höhere Festigkeiten bzw. Bauteilsteifigkeiten gewünscht werden.

Nachfolgend wird die Erfindung anhand einer mehrere Ausführungsbeispiele darstellenden Zeichnung näher erläutert. Es zeigen:
- Fig. 1: einen aus Blech geformten einschaligen Fahrwerkslenker in Draufsicht;
- Fig. 2: eine vergrößerte Querschnittansicht eines Arms des Fahrwerkslenkers entlang der Schnittlinie A-A in Fig. 1;
- Fig. 3: eine zweite Ausführungsform eines aus Blech geformten einschaligen Fahrwerkslenkers in perspektivischer Ansicht;
- Fig. 4: eine dritte Ausführungsform eines aus Blech geformten einschaligen Fahrwerkslenkers in perspektivischer Ansicht; und
- Fig. 5: eine vierte Ausführungsform eines aus Blech geformten einschaligen Fahrwerkslenkers in perspektivischer Ansicht.

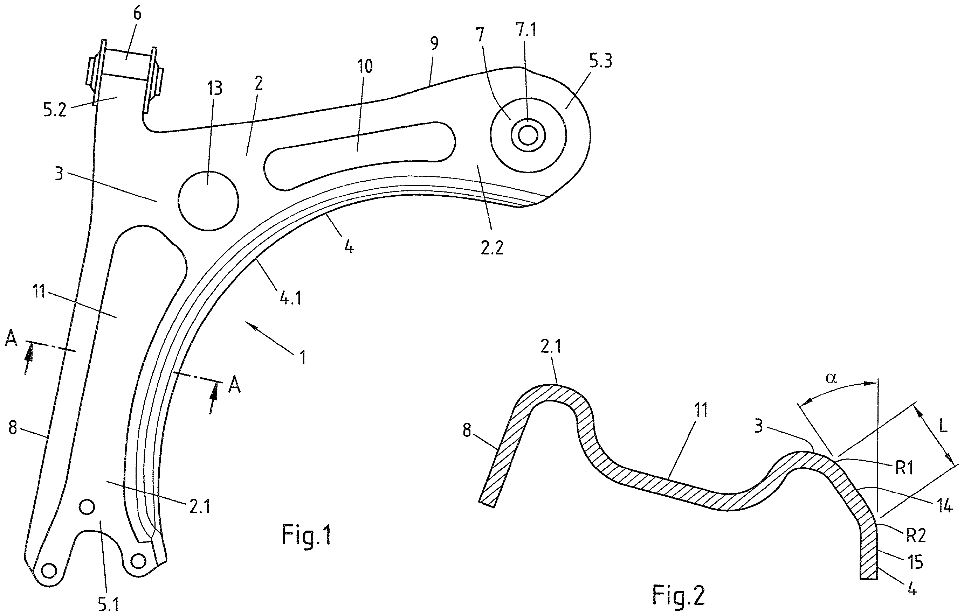

Der in den Figuren 1 und 2 dargestellte Fahrwerkslenker (Querlenker) 1 weist einen Grundkörper auf, der im Wesentlichen eine L-förmige oder dreieckige Konfiguration hat. Er ist als Vorderachsquerlenker für ein Kraftfahrzeug, insbesondere ein Personenkraftfahrzeug, ausgebildet.

Der Grundkörper 2 des Fahrwerkslenkers 1 ist als einschaliges (einstückiges) Blechformteil gestaltet. Er ist aus einer Blechplatine zu der Schale umgeformt, insbesondere durch Tiefziehen. Der Grundkörper 2 weist zwei ineinander übergehende Arme 2.1, 2.2 auf, die eine Grundkörperebene 3 und einen konkavförmigen Randbereich 4 definieren.

An dem Grundkörper 2 sind Lagerbereiche 5.1, 5.2, 5.3 zur Anbindung von Lagerelementen ausgebildet. Eines der Lagerelemente ist eine Bundbuchse 6, die an dem Lagerbereich 5.2 angeschweißt wird und eine gummiummantelte Lagerbuchse (nicht gezeigt) aufnimmt. An dem radseitigen Lagerbereich 5.1 wird ein Lagerzapfen (nicht gezeigt) montiert, der typischerweise als Kugelgelenk ausgebildet ist. Der als Lagerauge ausgebildete Lagerbereich 5.3 dient der Aufnahme eines Gummikörpers 7, der eine Lagerbuchse (Bundbuchse) 7.1 form- und stoffschlüssig umschließt. Das Lagerauge 5.3 weist einen umlaufenden Kragen (Durchzug) 5.31 auf.

Der konkavförmige Randbereich 4 des Grundkörpers 2 erstreckt sich von dem radseitigen Lagerbereich 5.1 bis zu einem karosserieseitigen Lagerbereich 5.3 und ist relativ zu der Grundkörperebene 3 abgewinkelt. Die dem konkaven Randbereich 4 gegenüberliegenden Randbereiche 8, 9 der Arme 2.1, 2.2 sind ebenfalls abgewinkelt, und zwar in etwa oder nahezu in die gleiche Richtung wie der konkavförmige Randbereich 4, so dass die Arme 2.1, 2.2 ein im Wesentlichen U- oder W-förmiges Querschnittsprofil haben. Der Grundkörper 2 weist an dem jeweiligen Lagerbereich 5.1, 5.2, 5.3 eine offene Querschnittsform auf.

In die Grundkörperebene 3 sind Sicken oder Vertiefungen 10, 11 eingeformt. Des Weiteren können in der Grundkörperebene 3 und/oder in mindestens einer der Vertiefungen 10, 11 Durchgangslöcher, beispielsweise eine einen umlaufenden Kragen (Durchzug) 13.1 aufweisende Öffnung 13 vorgesehen sein. Der Kragen 13.1, 5.31 steht dabei von der Seite des Grundkörpers 2 ab, von der auch die abgewinkelten Randbereiche 4, 8, 9 vorstehen.

Der konkavförmige Randbereich 4 des Grundkörpers 2 hat eine schräge Fläche (Fase) 14, die im Querschnitt betrachtet mit der an sie angrenzenden Fläche 15 einen Winkel α im Bereich von 25° bis 75° einschließt (vgl. Fig. 2). Im Querschnitt betrachtet weisen die Flächen 14,15 jeweils einen im Wesentlichen geraden Längen- oder Tiefenabschnitt auf. Die schräge Fläche 14 ist von zwei Radien oder runden Kanten R1, R2 begrenzt.

Die Fase 14 erstreckt sich zumindest entlang eines Bogenlängenabschnitts des abgewinkelten, konkaven Randbereichs 4, wobei dieser Bogenlängenabschnitt mindestens 10%, vorzugsweise mindestens 20% der Bogenlänge des konkaven Randbereichs 4 beträgt.

Bei dem in den Figuren 1 und 2 dargestellten Ausführungsbeispiel erstreckt sich die schräge Fläche (Fase) 14 nahezu über die gesamte Bogenlänge des abgewinkelten, konkaven Randbereichs 4. Lediglich am Ende des Arms 2.1, an dem der radträgerseitige Lagerbereich 5.1 ausgebildet ist, weist der abgewinkelte, konkave Randbereich 4 des Grundkörpers 2 einen Bogenlängenabschnitt ohne die Fase 14 auf (vgl. Fig. 1).

Der Winkel α, den die schräge Fläche 14 mit der an sie angrenzenden Fläche 15 einschließt, ist entlang des Bogenlängenabschnitts bzw. abgewinkelten, konkaven Randbereichs 4 im Wesentlichen konstant ausgebildet. Der Winkel α beträgt beispielsweise ca. 35°(vgl. Fig. 2). Auch ist die Länge (Tiefe) L der schrägen Fläche 14 entlang des Bogenlängenabschnitts bzw. konkaven Randbereichs 4 im Wesentlichen konstant ausgebildet. An der Schnittlinie A-A in Fig. 1 beträgt die Länge (Tiefe) L beispielsweise ca. 15 mm (vgl. Fig. 2).

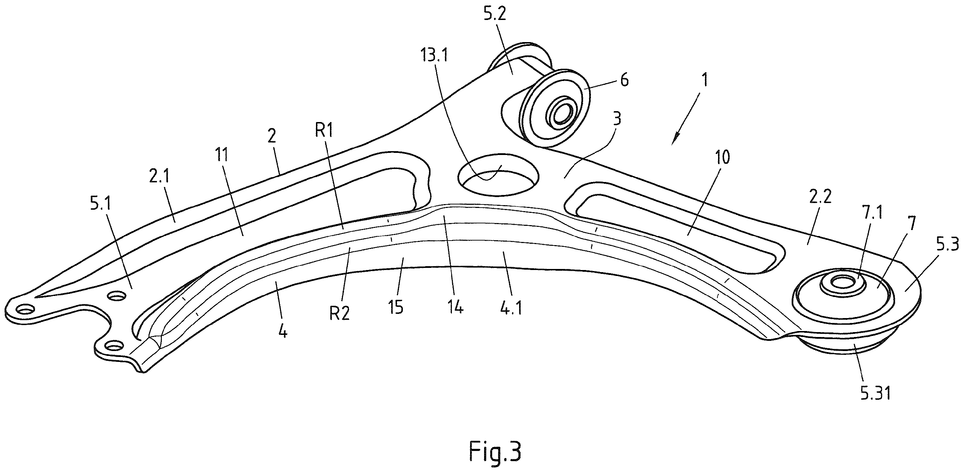

Das in Fig. 3 gezeigte Ausführungsbeispiel des erfindungsgemäßen Fahrwerkslenkers 1 unterscheidet sich von dem in den Figuren 1 und 2 dargestellten Beispiel dadurch, dass sich der Winkel α, den die schräge Fläche 14 mit der an sie angrenzenden Fläche 15 einschließt, entlang des Bogenlängenabschnitts bzw. abgewinkelten, konkaven Randbereichs 4 ändert. An dem mittleren Abschnitt des Arms 2.1 beträgt der Winkel α beispielsweise ca. 35°. Im mittleren Bereich 4.1 der Bogenlänge des abgewinkelten, konkaven Randbereichs 4, etwa dort, wo die Arme 2.1, 2.2 in einander übergehen bzw. der Randbereich 4 seinen kürzesten Abstand zu der Durchgangsöffnung 13 hat, ist der Winkel α dagegen deutlich größer. Beispielsweise liegt er dort im Bereich von 45° bis 60°. Ausgehend von dem mittleren Bereich 4.1 in Richtung des Endes des Blecharms 2.2, an welchem der Lagerbereich 5.3 ausgebildet ist, wird der Winkel α kleiner, wobei er am oder nahe dem Ende des Arms 2.2 beispielsweise einen Wert im Bereich von 30° bis 40° hat.

Ferner ist in Fig. 3 zu erkennen, dass sich die Länge (Tiefe) L der schrägen Fläche 14 entlang des Bogenlängenabschnitts bzw. abgewinkelten, konkaven Randbereichs 4 ändert. Im Querschnitt des jeweiligen Arms 2.1, 2.2 betrachtet hat die schräge Fläche 14 eine Länge L im Bereich von 5 mm bis 20 mm. An dem mittleren Abschnitt des Arms 2.1 beträgt die Länge (Tiefe) L beispielsweise ca. 15 mm. Dagegen ist die Länge L der schrägen Fläche 14 im mittleren Bereich 4.1 der Bogenlänge des Randbereichs 4, etwa dort, wo die Arme 2.1, 2.2 in einander übergehen bzw. der Randbereich 4 seinen kürzesten Abstand zu der Durchgangsöffnung 13 hat, deutlich größer. Beispielsweise beträgt sie dort zwischen 16 mm und 20 mm. Ausgehend von dem mittleren Bereich 4.1 in Richtung des Lagerauges 5.3 verringert sich die Länge (Tiefe) L der Fase 14, wobei sie am oder nahe dem Ende des Arms 2.2 beispielsweise einen Wert zwischen 5 mm und 15 mm besitzt.

Bei dem in Fig. 3 dargestellten Fahrwerkslenker 1 sind somit der Winkel α sowie die Länge (Tiefe) L der schrägen Fläche (Fase) 14 des abgewinkelten, konkaven Randbereichs 4 im mittleren Bereich 4.1 des Lenkers 1 deutlich größer als an den freien Enden seiner Arme 2.1, 2.2.

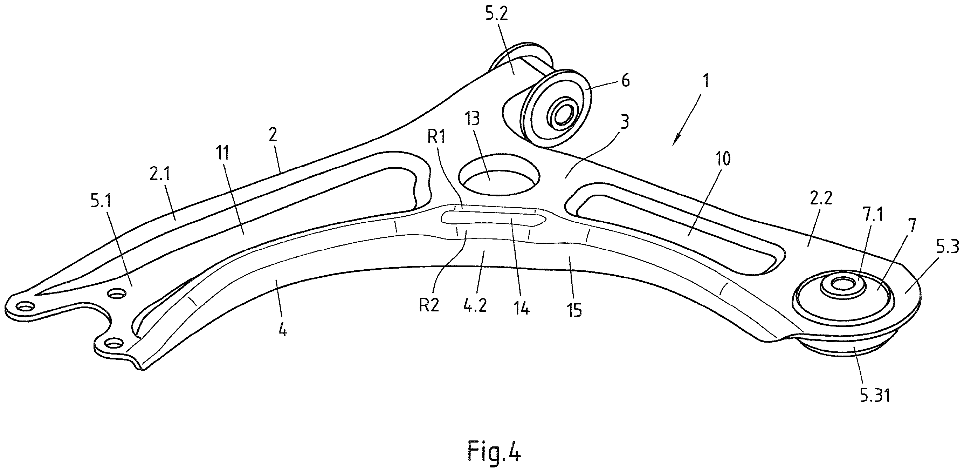

Das in Fig. 4 gezeigte Ausführungsbeispiel des erfindungsgemäßen Fahrwerkslenkers 1 unterscheidet sich von dem in den Figuren 1 und 2 dargestellten Beispiel dadurch, dass sich die schräge Fläche (Fase) 14 über eine deutlich kürzere Teillänge der Bogenlänge des abgewinkelten, konkaven Randbereichs erstreckt 4 als bei dem in den Figuren 1 bis 3 gezeigten Fahrwerkslenker. Die Fase 14 erstreckt sich hier im Wesentlichen entlang eines Bogenlängenabschnitts 4.2, der nahe der Öffnung 13 bzw. zwischen den einander zugewandeten Enden der Vertiefungen 10, 11 des Grundkörpers 2 liegt. Die Arme 2.1, 2.2 des Querlenkers 1 gehen in diesem Bogenlängenabschnitt 4.2 ineinander über. In dem Ausführungsbeispiel gemäß Fig. 4 ändern sich der Winkel α und die Länge (Tiefe) L der schrägen Fläche 14 über den Verlauf der Fläche 14 kaum oder nur wenig.

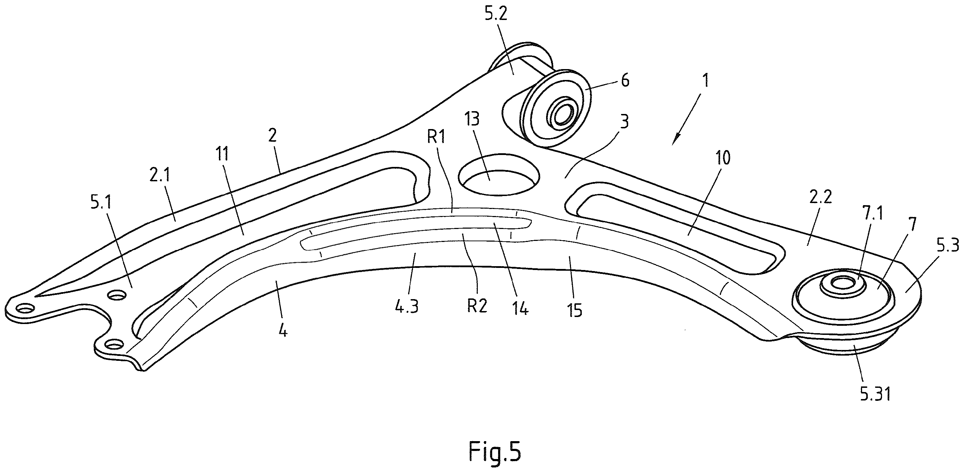

Auch das weitere, in Fig. 5 gezeigte Ausführungsbeispiel des erfindungsgemäßen Fahrwerkslenkers unterscheidet sich von dem in den Figuren 1 und 2 dargestellten Beispiel dadurch, dass sich die schräge Fläche 14 über eine deutlich kürzere Teillänge der Bogenlänge des abgewinkelten, konkaven Randbereichs 4 erstreckt als beim Fahrwerkslenker gemäß den Figuren 1 und 2. Die Fase 14 erstreckt sich in diesem Fall im Wesentlichen entlang eines Bogenlängenabschnitts 4.3, der nahe der Öffnung 13 (bzw. Lenkermitte) und neben einem Längsabschnitt der Vertiefung 11 des Arms 2.1 liegt. Bei dem Fahrwerkslenker 1 gemäß Fig. 5 ändern sich der Winkel α und die Länge (Tiefe) L der schrägen Fläche 14 über den Verlauf der Fläche 14 kaum oder nur wenig.

Die Ausführung der Erfindung ist nicht auf die in der Zeichnung dargestellten Ausführungsbeispiele beschränkt. Vielmehr sind zahlreiche Varianten denkbar, die auch bei von diesen Beispielen abweichender Gestaltung von der in den beiliegenden Ansprüchen angegebenen Erfindung Gebrauch machen. Beispielsweise kann ein erfindungsgemäßer Fahrwerkslenker 1 entlang eines Bogenlängenabschnitts des abgewinkelten, konkavförmigen Randbereichs 4 auch zwei oder mehr aufeinander folgende schräge Flächen (Fasen) 14 aufweisen, die jeweils im Querschnitt betrachtet mit einer an sie angrenzenden Fläche 15 des abgewinkelten, konkavförmigen Randbereichs 4 einen Winkel im Bereich von 25° bis 75° einschließen.

## Patentansprüche

1. Fahrwerkslenker (1) mit einem einschaligen Grundkörper (2) aus Blech, an dem mehrere Lagerbereiche (5.1, 5.2, 5.3) zur Anbindung von Lagerelementen ausgebildet sind, mit denen der Grundkörper (2) mit der Karosserie und einem beweglichen Teil einer Radaufhängung eines Kraftfahrzeuges verbindbar ist, wobei der Grundkörper (2) zwei ineinander übergehende Arme (2.1, 2.2) aufweist, die eine Grundkörperebene (3) und einen konkavförmigen Randbereich (4) des Grundkörpers definieren, wobei sich der konkavförmige Randbereich (4) von einem radseitigen Lagerbereich (5.1) bis zu einem karosserieseitigen Lagerbereich (5.3) erstreckt und relativ zu der Grundkörperebene (3) abgewinkelt ist, **dadurch gekennzeichnet, dass** der abgewinkelte, konkavförmige Randbereich (4) zumindest entlang eines Bogenlängenabschnitts (4.2,4.3) mindestens eine schräge Fläche (14) aufweist, die einer Fase entspricht und im Querschnitt betrachtet mit einer an sie angrenzenden Fläche (15) des abgewinkelten, konkavförmigen Randbereichs einen Winkel (α) im Bereich von 25° bis 75° einschließt, wobei der Bogenlängenabschnitt (4.2, 4.3) mindestens 10%, vorzugsweise mindestens 20% der Bogenlänge des abgewinkelten, konkavförmigen Randbereichs (4) beträgt, und wobei die schräge Fläche (14) im Querschnitt betrachtet eine Länge (L) im Bereich von 5 mm bis 20 mm aufweist.

2. Fahrwerkslenker nach Anspruch 1, **dadurch gekennzeichnet, dass** sich der Winkel (α), den die schräge Fläche (14) mit einer an sie angrenzenden Fläche (15) des abgewinkelten, konkavförmigen Randbereichs (4) einschließt, entlang des Bogenlängenabschnitts ändert, wobei die Änderung mindestens 5°, vorzugsweise mindestens 10° beträgt.

3. Fahrwerkslenker nach Anspruch 1 oder 2, **dadurch gekennzeichnet, dass** sich die Länge (L) der schrägen Fläche (14) entlang des Bogenlängenabschnitts ändert, wobei die Änderung mindestens 1 mm, insbesondere mindestens 2 mm beträgt.

4. Fahrwerkslenker nach einem der Ansprüche 1 bis 3, **dadurch gekennzeichnet, dass** der die schräge Fläche (14) aufweisende Bogenlängenabschnitt (4.2,4.3) den Grundkörperbereich kreuzt, in welchem die beiden Arme (2.1, 2.2) ineinander übergehen.

5. Fahrwerkslenker nach einem der Ansprüche 1 bis 4, **dadurch gekennzeichnet, dass** die Grundkörperebene (3) mit einer runden Kante (R1) in die schräge Fläche (14) übergeht.

6. Fahrwerkslenker nach einem der Ansprüche 1 bis 5, **dadurch gekennzeichnet, dass** die schräge Fläche (14) mit einer runden Kante (R2) in die an sie angrenzende Fläche (15) des abgewinkelten, konkavförmigen Randbereichs (4) übergeht.

7. Fahrwerkslenker nach einem der Ansprüche 1 bis 6, **dadurch gekennzeichnet, dass** der Grundkörper (2) an dem jeweiligen Lagerbereich (5.1, 5.2, 5.3) eine offene Querschnittsform aufweist.

8. Fahrwerkslenker nach einem der Ansprüche 1 bis 7, **dadurch gekennzeichnet, dass** das Blech eine Dicke im Bereich von 2 mm bis 6 mm und eine Zugfestigkeit im Bereich von 350 MPa bis 1.200 MPa besitzt.

9. Fahrwerkslenker nach einem der Ansprüche 1 bis 8, **dadurch gekennzeichnet, dass** der Grundkörper (2) aus Dualphasenstahl, Complexphasenstahl oder thermomechanisch gewalztem Kaltformstahl besteht.

## Claims

1. Chassis link (1) comprising a single-shell sheet metal main body (2), on which a plurality of bearing regions (5.1, 5.2, 5.3) are formed for attaching bearing elements by which the main body (2) can be connected to the bodywork and to a movable part of a wheel suspension of a motor vehicle, the main body (2) comprising two arms (2.1, 2.2) which merge into one another and define a main-body plane (3) and a concave edge region (4) of the main body, the concave edge region (4) extending from a wheel-side bearing region (5.1) towards a bodywork-side bearing region (5.3) and being at an angle relative to the main-body plane (3), **characterised in that** the angled, concave edge region (4) comprises, along at least one curve length portion (4.2, 4.3), at least one oblique surface (14) which corresponds to a chamfer and, when viewed in cross section, forms an angle (α) in the range of from 25° to 75° with a surface (15), adjacent thereto, of the angled, concave edge region, wherein the curve length portion (4.2, 4.3) is at least 10 %, preferably at least 20 %, of the curve length of the angled, concave edge region (4), and wherein, when viewed in cross section, the oblique surface (14) has a length (L) in the range of from 5 mm to 20 mm.

2. Chassis link according to claim 1, **characterised in that** the angle (α) formed by the oblique surface (14) and a surface (15), adjacent thereto, of the angled, concave edge region (4) varies along the curve length portion, the variation being at least 5°, preferably at least 10°.

3. Chassis link according to either claim 1 or claim 2, **characterised in that** the length (L) of the oblique surface (14) varies along the curve length portion, the variation being at least 1 mm, in particular at least 2 mm.

4. Chassis link according to any of claims 1 to 3, **characterised in that** the curve length portion (4.2,4.3) having the oblique surface (14) crosses the region of the main body in which the two arms (2.1, 2.2) merge into one another.

5. Chassis link according to any of claims 1 to 4, **characterised in that** the main-body plane (3) merges, with a round edge (R1), into the oblique surface (14).

6. Chassis link according to any of claims 1 to 5, **characterised in that** the oblique surface (14) merges, with a round edge (R2), into the surface (15), adjacent thereto, of the angled, concave edge region (4).

7. Chassis link according to any of claims 1 to 6, **characterised in that** the main body (2) has an open cross-sectional shape at each bearing region (5.1, 5.2, 5.3).

8. Chassis link according to any of claims 1 to 7, **characterised in that** the sheet has a thickness is the range of from 2 mm to 6 mm and a tensile strength in the range of from 350 MPa to 1200 MPa.

9. Chassis link according to any of claims 1 to 8, **characterised in that** the main body (2) consists of dual-phase steel, complex phase steel or thermomechanically rolled, cold-formed steel.

## Revendications

1. Bras de suspension pour véhicule automobile (1) avec un corps de base (2) monocoque en tôle, sur lequel sont formés plusieurs zones de montage (5.1, 5.2, 5.3) pour le raccordement d'éléments de support, au moyen desquels le corps de base (2) peut être relié à la carrosserie et à une pièce mobile d'une suspension de roue d'un véhicule automobile, sachant que le corps de base (2) est doté de deux bras (2.1, 2.2), qui, passant l'un dans l'autre, définissent un plan de corps de base (3) et une zone de bord de forme concave (4) du corps de base, sachant que la zone de bord de forme concave (4) s'étend d'une zone de montage (5.1), côté roue, à une zone de montage (5.3), côté carrosserie, et est coudée par rapport au plan de corps de base (3), **caractérisé en ce que** la zone de bord de forme concave, coudée (4), présente, au moins le long d'une section longitudinale, arquée (4.2, 4.3), au moins une surface en biais (14), qui correspond à un biseau, et qui, vue en coupe transversale, forme, avec une surface (15) y adjacente de la zone de bord de forme concave, coudée, un angle (α), situé dans une plage de 25° à 75°, sachant que la section longitudinale, arquée (4.2, 4.3) correspond à au moins 10%, de préférence à au moins 20% de la longueur de l'arc de la zone de bord de forme concave (4) coudée, et sachant que la surface en biais (14), vue en coupe transversale, est dotée d'une longueur (L) située dans une plage de 5 mm à 20 mm.

2. Bras de suspension pour véhicule automobile selon la revendication 1, **caractérisé en ce que** l'angle (α), formé par la surface en biais (14) et une surface (15), y adjacente, de la zone de bord de forme concave, coudée (4), se modifie le long de la section longitudinale, arquée, sachant que la modification est d'au moins 5°, de préférence d'au moins 10°.

3. Bras de suspension pour véhicule automobile selon revendication 1 ou 2, **caractérisé en ce que** la longueur (L) de la surface en biais (14) change le long de la section longitudinale, arquée, sachant que le changement est d'au moins 1 mm, en particulier d'au moins 2 mm.

4. Bras de suspension pour véhicule automobile selon l'une des revendications 1 à 3, **caractérisé en ce que** la section longitudinale, arquée (4.2, 4.3), dotée de la surface en biais (14), croise la section du corps de base, dans laquelle les deux bras (2.1, 2.2) passent l'un dans l'autre.

5. Bras de suspension pour véhicule automobile selon l'une des revendications 1 à 4, **caractérisé en ce que** le plan de corps de base (3) se raccorde à la surface en biais (14) avec un bord arrondi (R1).

6. Bras de suspension pour véhicule automobile selon l'une des revendications 1 à 5, **caractérisé en ce que** la surface en biais (14) se raccorde, avec un bord arrondi (R2) à la face y adjacente (15) de la zone de bord de forme concave, coudée (4).

7. Bras de suspension pour véhicule automobile selon l'une des revendications 1 à 6, **caractérisé en ce que** le corps de base (2) présente une coupe transversale ouverte dans chacune des zones de montage (5.1, 5.2, 5.3).

8. Bras de suspension pour véhicule automobile selon l'une des revendications 1 à 7, **caractérisé en ce que** la tôle est dotée d'une épaisseur située dans une plage de 2 mm à 6 mm, et d'une résistance à la traction située dans une plage de 350 MPa à 1200 MPa.

9. Bras de suspension pour véhicule automobile selon l'une des revendications 1 à 8, **caractérisé en ce que** le corps de base (2) consiste en acier Dual Phase, en acier Complex Phase ou en acier formé à froid, obtenu par laminage thermomécanique.
